# EUROPEAN PATENT APPLICATION

(11) **EP 4 472 157 A1**
(43) Date of publication of application: **04.12.2024**
(21) Application number: 22922923.2
(22) Date of filing: 29.01.2022
(51) Int. Cl.: H04L 41/0897, H04W 4/50

(54) **COMMUNICATION METHOD AND APPARATUS, AND STORAGE MEDIUM**

(71) Applicant: Beijing Xiaomi Mobile Software Co., Ltd., Beijing 100085 (CN)
(72) Inventor: LIANG, Haoran, Beijing 100085 (CN); SHEN, Yang, Beijing 100085 (CN)
(74) Representative: Gunzelmann, Rainer
(86) International application number: PCT/CN2022/075129
(87) International publication number: WO 2023/142094

(57) **Abstract**

Provided in the present disclosure are a communication method and apparatus, and a storage medium. The communication method comprises: searching for UE digital twin configuration information from a second core network element, the UE digital twin configuration information being used for creating a UE digital twin; on the basis of the UE digital twin configuration information, creating a UE digital twin; and using the UE digital twin, in place of a physical UE, to communicate with other devices in a network. The present disclosure can create a UE digital twin to communicate, in place of a physical UE, with other devices in a network; a UE digital twin is used for a network service, so that the purpose that DT is applied to a mobile communication technology network to realize a network service is achieved, and the usability is high.

## Description

### TECHNICAL FIELD

The present disclosure relates to a field of communication, and particularly to a method and an apparatus for communication, and a storage medium.

### BACKGROUND

Currently, a definition of digital twin (DT) includes three primary elements, namely, a physical object in a physical space, a virtual object in a virtual space, and a data link between the two spaces. The virtual object in DT is an accurate digital replica of a corresponding real-world object. The virtual object continually adapts to operational changes based on collected online data and information and predicts a state of the corresponding physical object. The data link between the virtual and physical spaces can ensure co-evolution of the virtual object and physical object.

The DT provides novel virtual node to virtual node and physical node to physical node communication modes. However, there is currently no solution for applying the digital twin in mobile communication technology networks, such as in 5th generation mobile communication technology (5G) network, to enable network services.

### SUMMARY

To overcome the problems in related art, embodiments of the present disclosure provide a method and an apparatus for communication, and a storage medium.

According to a first aspect of embodiments of the present disclosure, there is provided a method for communication. The method is performed by a first core network function, and includes:
searching for UE digital twin profile information from a second core network function; wherein the UE digital twin profile information is configured to create a UE digital twin;
creating the UE digital twin based on the UE digital twin profile information; and
performing communication with an other device in a network through the UE digital twin in place of a physical UE.

Optionally, performing the communication with the other device in the network through the UE digital twin in place of the physical UE, includes any one of:
performing the communication with the other device through the UE digital twin in place of the physical UE in a case that the physical UE is unavailable; or
performing the communication with the other device through the UE digital twin in place of the physical UE in a case that the physical UE performs a non-real-time task.

Optionally, the method further includes:
performing task collaboration with the other device through the UE digital twin, after loading the UE digital twin profile information.

Optionally, the method further includes:
sending data generated in a process of the communication or the task collaboration to the second core network function; in which the second core network function is configured to store the data and synchronize the data with the physical UE.

Optionally, the other device includes at least one of:
a core network function, an other physical UE, or an other UE digital twin.

Optionally, the digital twin profile information includes at least one of:
state information of the physical UE;
network service capability information of the physical UE;
task data of the physical UE;
strategy information for the physical UE to perform a task;
model information and/or algorithm information corresponding to a task; or
information of an environment where the physical UE is located.

Optionally, the state information includes at least one of:
battery state information, temperature information, transmission power information, processor computing capability information, screen resolution information, or other state information.

According to a second aspect of embodiments of the present disclosure, there is provided a method for communication. The method is performed by a second core network function, and includes:
sending UE digital twin profile information searched by a first core network function to the first core network function; in which the UE digital twin profile information is configured to create a UE digital twin.

Optionally, the digital twin profile information includes at least one of:
state information of a physical UE;
network service capability information of a physical UE;
task data of a physical UE;
strategy information for a physical UE to perform a task;
model information and/or algorithm information corresponding to a task; or
information of an environment where a physical UE is located.

Optionally, the state information includes at least one of:
battery state information, temperature information, transmission power information, processor computing capability information, screen resolution information, or other state information.

Optionally, the method further includes:
in response to an access and mobility management function (AMF) invoking service operation related to the UE digital twin profile information on the second core network function, performing the service operation.

Optionally, the service operation includes at least one of:
creation service operation, configured to create the UE digital twin profile information;
update service operation, configured to update at least one of the UE digital twin profile information; or
deletion service operation, configured to delete at least one of the UE digital twin profile information.

Optionally, the method further includes:
receiving data sent by the first core network function; in which the data is generated by the first core network function in a process of performing communication or task collaboration with an other device in a network through the UE digital twin in place of a physical UE;
storing the data; and
synchronizing the data with the physical UE.

Optionally, the second core network function is an independently configured network function; or
the second core network function is configured on an unified data management (UDM) or an unified data repository (UDR).

According to a third aspect of embodiments of the present disclosure, there is provided a method for communication. The method is performed by a physical UE, and includes:
sending a request message to an access and mobility management function (AMF); in which the request message is configured to request a second core network function to perform a service operation related to UE digital twin profile information, and the UE digital twin profile information is configured to create a UE digital twin; and
receiving a response message returned by the AMF.

Optionally, the service operation includes at least one of:
creation service operation, configured to create the UE digital twin profile information;
update service operation, configured to update at least one of the UE digital twin profile information; or
deletion service operation, configured to delete at least one of the UE digital twin profile information.

Optionally, the request message is transmitted through an N1 interface non-access stratum(NAS) signal; and/or
the response message is transmitted through an N1 interface NAS signal .

Optionally, the digital twin profile information includes at least one of:
state information of the physical UE;
network service capability information of a physical UE;
task data of the physical UE;
strategy information for the physical UE to perform a task;
model information and/or algorithm information corresponding to a task; or
information of an environment where the physical UE is located.

Optionally, the state information includes at least one of:
battery state information, temperature information, transmission power information, processor computing capability information, screen resolution information, or other state information.

According to a fourth aspect of embodiments of the present disclosure, there is provided a method for communication. The method is applied to an access and mobility management function (AMF), and includes:
in response to receiving a request message sent by a physical UE, invoking service operation corresponding to the request message on a second core network function; wherein the request message is configured to request the second core network function to perform service operation related to UE digital twin profile information, and the UE digital twin profile information is configured to create a UE digital twin; and
returning a response message to the physical UE.

Optionally, the service operation includes at least one of:
creation service operation, configured to create the UE digital twin profile information;
update service operation, configured to update at least one of the UE digital twin profile information; or
deletion service operation, configured to delete at least one of the UE digital twin profile information.

Optionally, the request message is transmitted through an N1 interface non-access stratum (NAS) signal; and/or
the response message is transmitted through an N1 interface NAS signal.

Optionally, the digital twin profile information includes at least one of:
state information of the physical UE;
network service capability information of the physical UE;
task data of the physical UE;
strategy information for the physical UE to perform a task;
model information and/or algorithm information corresponding to a task; or
information of an environment where the physical UE is located.

Optionally, the state information includes at least one of:
battery state information, temperature information, transmission power information, processor computing capability information, screen resolution information, or other state information.

According to a fifth aspect of embodiments of the present disclosure, there is provided an apparatus for communication. The apparatus is applied to a first core network function, and includes:
a searching module, configured to search for UE digital twin profile information from a second core network function; in which the UE digital twin profile information is configured to create a UE digital twin;
a creating module, configured to create the UE digital twin based on the UE digital twin profile information; and
a communication module, configured to communicate with an other device in a network through the UE digital twin in place of a physical UE.

According to a sixth aspect of embodiments of the present disclosure, there is provided an apparatus for communication. The apparatus is applied to a second core network function, and includes:
a first sending module, configured to send UE digital twin profile information searched by a first core network function to the first core network function; in which the UE digital twin profile information is configured to create a UE digital twin.

According to a seventh aspect of embodiments of the present disclosure, there is provided an apparatus for communication. The apparatus is applied to a physical UE, and includes:
a second sending module, configured to send a request message to an access and mobility management function (AMF); in which the request message is configured to request a second core network function to perform service operation related to UE digital twin profile information, and the UE digital twin profile information is configured to create a UE digital twin;
a receiving module, configured to receive a response message returned by the AMF.

According to an eighth aspect of embodiments of the present disclosure, there is provided an apparatus for communication. The apparatus is applied to an access and mobility management function (AMF), and includes:
an invoking module, configured to, in response to receiving a request message sent by a physical UE, invoke service operation corresponding to the request message on a second core network function; wherein the request message is configured to request the second core network function to perform service operation related to UE digital twin profile information, and the UE digital twin profile information is configured to create a UE digital twin;
a third sending module, configured to return a response message to the physical UE.

According to a ninth aspect of embodiments of the present disclosure, there is provided a computer-readable storage medium. The computer-readable storage medium stores a computer program that, implements the method for communication of any one of the above first aspect.

According to a tenth aspect of an embodiment of the present disclosure, there is provided a computer-readable storage medium. The computer-readable storage medium stores a computer program that, implements the method for communication of any one of the above second aspect.

According to an eleventh aspect of an embodiment of the present disclosure, there is provided a computer-readable storage medium. The computer-readable storage medium stores a computer program that, implements the method for communication of any one of the above third aspect.

According to a twelfth aspect of an embodiment of the present disclosure, there is provided a computer-readable storage medium. The computer-readable storage medium stores a computer program that, implements the method for communication of any one of the above fourth aspect.

According to a thirteenth aspect of an embodiment of the present disclosure, there is provided an apparatus for communication. The apparatus includes:
a processor;
a memory storing instructions executable by the processor;
in which the processor is configured to execute the executable instructions to implement the method for communication of any one of the above first aspect.

According to a fourteenth aspect of embodiments of the present disclosure, there is provided an apparatus for communication. The apparatus includes:
a processor;
a memory storing instructions executable by the processor;
in which the processor is configured to execute the executable instructions to implement the method for communication of any one of the above second aspect.

According to a fifteenth aspect of embodiments of the present disclosure, there is provided an apparatus for communication. The apparatus includes:
a processor;
a memory storing instructions executable by the processor;
in which the processor is configured to execute the executable instructions to implement the method for communication of any one of the above third aspect.

According to a sixteenth aspect of embodiments of the present disclosure, there is provided an apparatus for communication. The apparatus includes:
a processor;
a memory storing instructions executable by the processor;
in which the processor is configured to execute the executable instructions to implement the method for communication of any one of the above fourth aspect.

Embodiments of the present disclosure provide technical solutions that may include the following beneficial effects:
In the embodiments of the present disclosure, the UE digital twin in the virtual world can be created to communicate with the other device in the network in place of the physical UE, enabling the UE digital twin in the virtual world for a network service, and realizing the purpose of applying the DT to a mobile communication technology network to implement network services, which has high availability.

It should be appreciated that the above general description and the subsequent detailed description are exemplary and explanatory only and do not limit the present disclosure.

### BRIEF DESCRIPTION OF THE DRAWINGS

The accompanying drawings herein are incorporated in and constitute a part of the specification, illustrate embodiments consistent with the present disclo sure, and together with the description, serve to explain the principle of the embodiments of the present disclosure.
FIG. 1 is a diagram illustrating an application scenario of a DT according to an embodiment of the present disclosure.
FIG. 2 is a flowchart illustrating a method for communication according to an embodiment of the present disclosure.
FIG. 3 is a flowchart illustrating another method for communication according to an embodiment of the present disclosure.
FIG. 4 is a flowchart illustrating another method for communication according to an embodiment of the present disclosure.
FIG. 5 is a flowchart illustrating another method for communication according to an embodiment of the present disclosure.
FIG. 6 is a flowchart illustrating another method for communication according to an embodiment of the present disclosure.
FIG. 7 is a flowchart illustrating another method for communication according to an embodiment of the present disclosure.
FIG. 8 is a diagram illustrating an architecture of applying a UE digital twin in a 5G network according to an embodiment of the present disclosure.
FIG. 9 is a diagram illustrating another architecture of applying a UE digital twin in a 5G network according to an embodiment of the present disclosure.
FIG. 10 is a flowchart illustrating another method for communication according to an embodiment of the present disclosure.
FIG. 11 is a flowchart illustrating another method for communication according to an embodiment of the present disclosure.
FIG. 12 is a flowchart illustrating a method for creating UE digital twin profile information according to an embodiment of the present disclosure.
FIG. 13 is a flowchart illustrating a method for updating UE digital twin profile information according to an embodiment of the present disclosure.
FIG. 14 is a flowchart illustrating a method for deleting UE digital twin profile information according to an embodiment of the present disclosure.
FIG. 15 is a block diagram illustrating an apparatus for communication according to an embodiment of the present disclosure.
FIG. 16 is a block diagram illustrating another apparatus for communication according to an embodiment of the present disclosure.
FIG. 17 is a block diagram illustrating another apparatus for communication according to an embodiment of the present disclosure.
FIG. 18 is a block diagram illustrating another apparatus for communication according to an embodiment of the present disclosure.
FIG. 19 is a schematic diagram illustrating a communication apparatus according to an embodiment of the present disclosure.
FIG. 20 is a schematic diagram illustrating another communication apparatus according to an embodiment of the present disclosure.

### DETAILED DESCRIPTION

Reference will now be made in detail to exemplary embodiments, examples of which are illustrated in the accompanying drawings. When the following description refers to the drawings, unless otherwise indicated, the same numbers in different drawings represent the same or similar elements. The implementations described in the following exemplary embodiments do not represent all implementations consistent with the embodiments of the present disclosure. Rather, they are merely examples of apparatuses and methods consistent with some aspects of the disclosure as recited in the accompanying claims.

Terms used in the embodiments of the present disclosure are for the purpose of describing specific embodiments only, and are not intended to limit the embodiments of the present disclosure. As used in the examples of this disclosure and the appended claims, the singular forms "a", "an" and "this" are also intended to include the plural forms unless the context clearly dictates otherwise. It should also be understood that the term "and/or" as used herein refers to and includes any and all possible combinations of one or more of the associated listed items.

It should be appreciated that although the embodiments of the present disclosure may use the terms first, second, third, etc. to describe various information, the information should not be limited to these terms. These terms are only used to distinguish information of the same type from one another. For example, without departing from the scope of the embodiments of the present disclosure, first information may also be called second information, and similarly, second information may also be called first information. Depending on the context, the word "if" as used herein may be interpreted as "in a case that" or "when" or "in response to determining that".

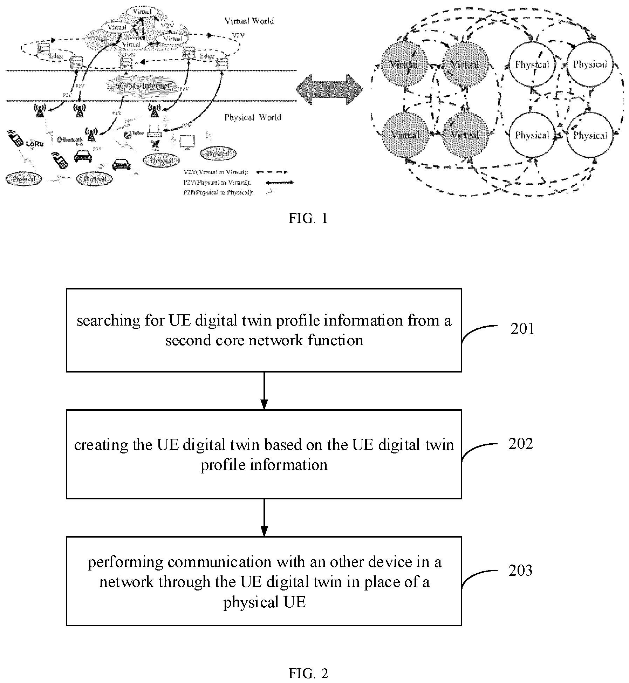

In a digital twin scenario, a physical object and a virtual twin may communicate, collaborate, share information, complete tasks with each other, and form an information-sharing network by connecting multiple DT nodes. Dynamic communication modes in the DT include a physical node to physical node mode, a virtual node to virtual node mode, and a physical node to physical node mode, referring to FIG. 1.

The DT provides novel virtual node to virtual node and physical node to physical node communication modes. However, how to use the digital twin to enhance a 5G network is still unknown.

In order to solve the above technical problems, the present disclosure provides the following methods for communication. A method for communication provided by the present disclosure is first described below for a first core network function, which is used to simulate a UE digital twin in a virtual world, and is managed by a core network.

In an embodiment, the first core network function may be referred to as a digital twin function (DTF), but this is not limited herein.

A method for communication is provided by an embodiment of the present disclosure. Referring to FIG. 2, which is a flowchart illustrating a method for communication according to an embodiment of the present disclosure. The method may be performed by a first core network function, and may include the following steps.

At step 201, UE digital twin profile information is searched from a second core network function.

In an embodiment of the present disclosure, a database may be deployed on the second core network function, and may store UE digital twin profile information corresponding to different physical UEs. The desired UE digital twin profile information is searched by the first core network function from the database. The UE digital twin profile information is configured to create a UE digital twin in a virtual world. The virtual world is relative to a real physical world, and the UE digital twin is a virtual device in the virtual world.

In an embodiment, the second network function may be referred to as UE digital twin profile management (UDTPM), but this is not limited herein.

At step 202, the UE digital twin is created based on the UE digital twin profile information.

At step 203, communication with an other device in a network is performed through the UE digital twin in place of a physical UE.

In an embodiment of the present disclosure, the other device may be a network device in the physical world, including but not limited to a core network function, a base station, and the like. Alternatively, the other device may be the other physical UE, or the other device may also be the other UE digital twin in the virtual world. This is not limited in the present disclosure.

In a possible implementation, in a case that the physical UE is unavailable, the communication with the other device is performed through the UE digital twin in place of the physical UE.

In another possible implementation, in a case that the physical UE performs a non-real-time task, the communication with the other device is performed through the UE digital twin in place of the physical UE.

In another possible implementation, in a case that the physical UE needs to save energy consumption, the communication with the other device in the network is performed through the UE digital twin in place of the physical UE.

In another possible implementation, in a case that a user of the physical UE turns on the DT function, the communication with the other device in the network is performed through the UE digital twin in place of the physical UE.

The above is only an exemplary illustration, and in practice, any situation in which the communication with the other device is performed through the UE digital twin in place of the physical UE shall fall within the scope of protection of the present disclosure.

In the above embodiments, the UE digital twin can be created to communicate with the other device in the network in place of the physical UE. The UE digital twin can be enabled for the network service, to realize the purpose of applying the DT to a mobile communication technology network to implement the network service, which has high availability.

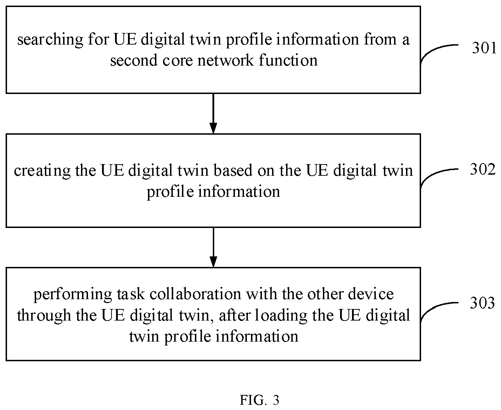

In some alternative embodiments, referring to FIG. 3, which is a flowchart illustrating a method for communication according to an embodiment of the present disclosure, the method may performed by a first core network function, and may include the following steps.

At step 301, UE digital twin profile information is searched from a second core network function.

In an embodiment of the present disclosure, a database may be deployed on the second core network function, and the desired UE digital twin profile information is searched by the first core network function from the database. The UE digital twin profile information is configured to create a UE digital twin in a virtual world. The virtual world is relative to the real physical world, and the UE digital twin is a virtual device in the virtual world.

At step 302, the UE digital twin is created based on the UE digital twin profile information.

At step 303, task collaboration with the other device is performed through the UE digital twin after loading the UE digital twin profile information.

In an embodiment of the present disclosure, the other device may be another physical UE, or the other device may be another UE digital twin in the virtual world. This is not limited in the present disclosure.

In a possible implementation, the other device may obtain a physical UE authorization before performing the task collaboration with the UE digital twin corresponding to the physical UE. In particular, the first core network function may confirm whether the other device is authorized to perform the task collaboration with the UE digital twin corresponding to the physical UE through a policy configured by the user, then the first core network function loads the UE digital twin profile information, and then performs the task collaboration with the other device through the UE digital twin in the virtual world.

In a possible implementation, the task collaboration includes, but is not limited to, receiving a message sent by the other device, processing data in the message, and feeding back a data processing result to the other device. For example, the first core network function may load the UE digital twin profile information, participate in collaborative machine learning task through the UE digital twin, and the like.

In the above embodiments, the UE digital twin, in place of the physical UE, can perform task collaboration with the other physical UE or the other UE digital twin, which has high availability.

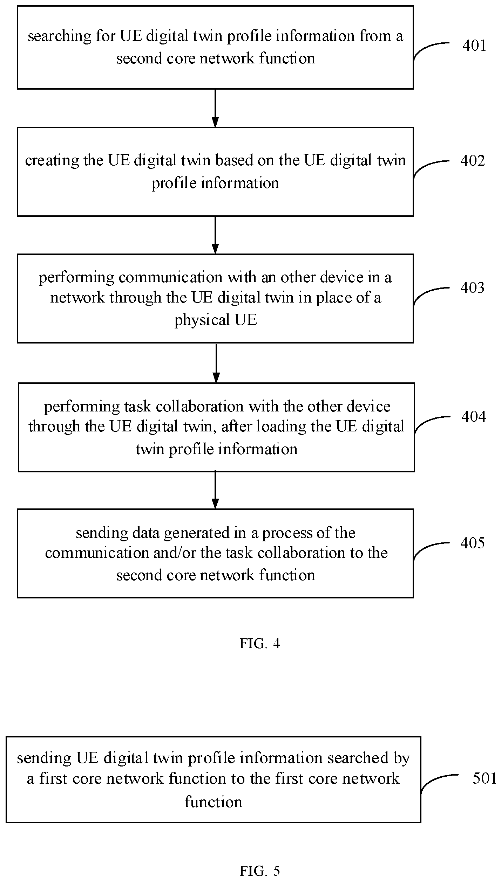

In some alternative embodiments, referring to FIG. 4, which is a flowchart illustrating a method for communication according to an embodiment of the present disclosure, the method may performed by a first core network function, and may include the following steps.

At step 401, UE digital twin profile information is searched from a second core network function.

In an embodiment of the present disclosure, a database may be deployed on the second core network function, and the desired UE digital twin profile information is searched by the first core network function from the database. The UE digital twin profile information is configured to create a UE digital twin in a virtual world. The virtual world is relative to the real physical world, and the UE digital twin is a virtual device in the virtual world.

At step 402, the UE digital twin is created based on the UE digital twin profile information.

At step 403, communication with an other device in a network is performed through the UE digital twin in place of a physical UE.

The specific implementation is similar to the above step 203 and will not be repeated herein.

At step 404, task collaboration with the other device is performed through the UE digital twin, after loading the UE digital twin profile information.

The specific implementation is similar to the above step 303 and will not be repeated herein.

In an embodiment of the present disclosure, at least one of the above steps 403 and 404 may be performed.

At step 405, data generated in a process of the communication and/or the task collaboration is sent to the second core network function.

In an embodiment of the present disclosure, the data generated in the process of the communication and/or the task collaboration may be sent to the second core network function. The second core network function may store the data in its own database, and synchronize the data with the physical UE.

In the above embodiments, the data generated by the UE digital twin can be synchronized with the physical UE, which improves the communication capability and task collaboration processing capability of the UE, and is easy to implement with high availability.

In some alternative embodiments, the digital twin profile information may include, but is not limited to, at least one of: state information of the physical UE; network service capability information of the physical UE; task data of a physical UE; strategy information for the physical UE to perform a task; model information and/or algorithm information corresponding to a task; or information of an environment where a physical UE is located.

The state information may include, but is not limited to, dynamic state information, static state information, or other state information.

In particular, the dynamic state information may include, but is not limited to, at least one of: battery state information, temperature information, transmission power information, processor computing capability information, or location information and the like.

For example, the battery state information may indicate a battery state as low battery level. For another example, the temperature information may indicate a terminal temperature is too high. For another example, the transmission power information may indicate a transmission power value of the terminal.

The processor computing capability includes, but is not limited to, a computing capability of a central processing unit (CPU) and/or a graphics processing unit (GPU).

The static status information includes, but is not limited to, information such as screen resolution information.

The other state information may be state information when performing a related task. In one possible implementation, the task may be a task of training a robotic arm action in the virtual world, and thus, the other state information may be robotic arm position tracking information and the like.

The above is only an exemplary illustration, and any relevant information that can describe the state of the physical UE shall fall within the scope of protection of the present disclosure.

The network service capability information of the physical UE includes, but is not limited to, ranging service capability information of whether or not ranging is supported, learning service capability information of whether or not various algorithm learnings are supported, and perception service capability information of whether or not a sensing capability is available.

The task data of the physical UE includes, but is not limited to, data which may be disclosed for a learning service, or data which may be provided to a third adaption function (AF).

The strategy information for the physical UE to perform a task includes, but is not limited to, rule information related to joint learning.

The model information and/or algorithm information corresponding to a task includes, but is not limited to, long short-term memory (LSTM) model information and/or algorithm information, convolutional neural network (CNN) model information and/or algorithm information, and the like.

The information of an environment where the physical UE is located includes, but is not limited to, information about an object of action, location information, and the like. The location information includes, but is not limited to, absolute location information of the physical UE, such as latitude and longitude information, relative location information of the physical UE with respect to a reference point, such as a relative distance value from the reference point, and the like.

The above is only an exemplary illustration, and in practice, any profile information that describes the physical UE to create the UE digital twin shall fall within the scope of protection of the present disclosure.

In the above embodiment, the UE digital twin can be generated based on the digital twin profile information, to realize the purpose of applying the DT to the mobile communication technology network to implement the network service, which has high availability.

A method for communication provided by the present disclosure is described below for a second core network function. This second core network function may be configured to manage UE digital twin profile information corresponding to different UEs, and is managed by a core network.

In an embodiment, this second core network function may be referred to as a UDTPM, but this is not limited herein.

An embodiment of the present disclosure provides a method for communication. Referring to FIG. 5, which is a flowchart illustrating a method for communication according to an embodiment of the present disclosure, the method may performed by the second core network function, and the method may include the following step.

At step 501, UE digital twin profile information searched by a first core network function is sent to the first core network function.

In an embodiment of the present disclosure, a database may be deployed on the second core network function, and may be configured to store UE digital twin profile information corresponding to different physical UEs. In a case that the first core network function needs to create a UE digital twin in a virtual world, the UE digital twin profile information searched by the first core network function may be sent to the first core network function. The UE digital twin profile information is configured to create the UE digital twin in the virtual world.

In the above embodiments, there is provided a network function for managing the UE digital twin profile information, thus providing convenience for applying the DT to the mobile communication technology network to implement the network service, which has high availability.

In some alternative embodiments, the digital twin profile information may include, but is not limited to, at least one of: state information of a physical UE; network service capability information of a physical UE; task data of a physical UE; strategy information for a physical UE to perform a task; model information and/or algorithm information corresponding to a task; or information of an environment where a physical UE is located.

The state information includes, but is not limited to, at least one of: battery state information, temperature information, transmission power information, processor computing capability information, screen resolution information, or other state information.

The digital twin profile information is the same as the digital twin profile information previously described and will not be repeated herein.

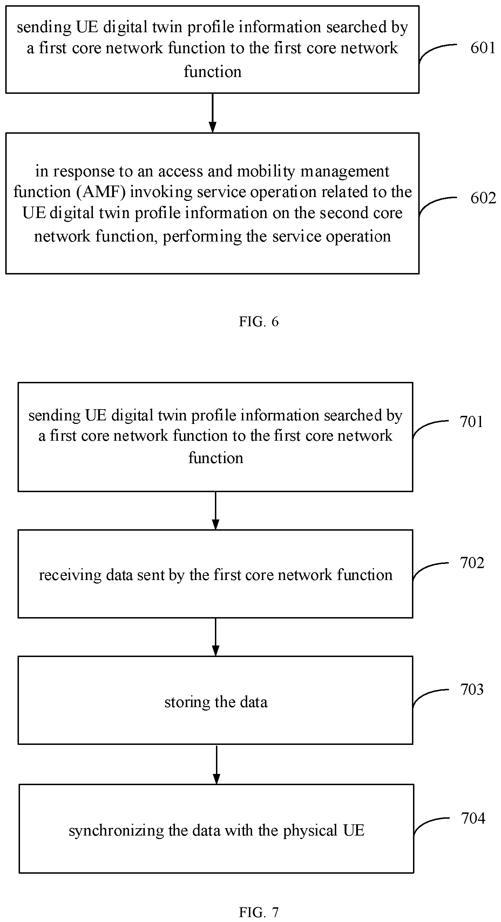

In some alternative embodiments, referring to FIG. 6, which is a flowchart illustrating a method for communication according to an embodiment of the present disclosure, the method may be performed by a second core network function, and the method may include the following steps.

At step 601, UE digital twin profile information searched by a first core network function is sent to the first core network function.

In an embodiment of the present disclosure, a database may be deployed on the second core network function, and may be configured to store UE digital twin profile information corresponding to different physical UEs. In a case that the first core network function needs to create a UE digital twin in a virtual world, the UE digital twin profile information searched by the first core network function may be sent to the first core network function. The UE digital twin profile information is configured to create the UE digital twin in the virtual world.

In a possible implementation, the second core network function may be an independently configured network function.

In another possible implementation, the second core network function is configured on a unified data management (UDM) or a unified data repository (UDR).

At step 602, in response to an access and mobility management function (AMF) invoking service operation related to the UE digital twin profile information on the second core network function, the service operation is performed.

In a possible implementation, the service operation includes, but is not limited to, at least one of: creation service operation, configured to create the UE digital twin profile information; update service operation, configured to update at least one of the UE digital twin profile information; or deletion service operation, configured to delete at least one of the UE digital twin profile information.

The creation service operation may be Nudtpm_ParameterProvision_Create service operation. The update service operation may be Nudtpm_ParameterProvision _Update service operation. The deletion service operation may be Nudtpm_ParameterProvision_Delete service operation.

The present disclosure does not limit the order for performing the step 601 and step 602.

In the above embodiments, the second core network function can perform the corresponding service operation based on the invocation instruction of the AMF, realizing the purpose of managing the UE digital twin profile information.

In some alternative embodiments, referring to FIG. 7, which is a flowchart illustrating a method for communication according to an embodiment of the present disclosure, the method may performed by a second core network function, and the method may include the following steps.

At step 701, UE digital twin profile information searched by a first core network function is sent to the first core network function.

In an embodiment of the present disclosure, a database may be deployed on the second core network function, and may be configured to store UE digital twin profile information corresponding to different physical UEs. In a case that the first core network function needs to create a UE digital twin in a virtual world, the UE digital twin profile information searched by the first core network function may be sent to the first core network function. The UE digital twin profile information is configured to create the UE digital twin in the virtual world.

At step 702, data sent by the first core network function is received.

In an embodiment of the present disclosure, the data may be generated by the first core network function in a process of performing communication and/or task collaboration with an other device in a network through the UE digital twin in place of a physical UE.

At step 703, the data is stored.

In an embodiment of the present disclosure, the second core network function may store the data in a self-deployed database.

At step 704, the data is synchronized with the physical UE.

In the above embodiments, the second core network function may synchronize the data generated by the UE digital twin during the communication and/or task collaboration with the physical UE, ensuring the synchronization between the physical UE and the UE digital twin, and realizing the purpose of applying the DT to the mobile communication technology network to implement the network service, which has high availability.

In some alternative embodiments, the second core network function may be an independently configured network function.

Alternatively, the second core network function may be configured on an UDM or an UDR.

In the above embodiments, the second core network function provided in the present disclosure can be individually configured or can be configured on an existing core network function, which is easy to implement and with high availability.

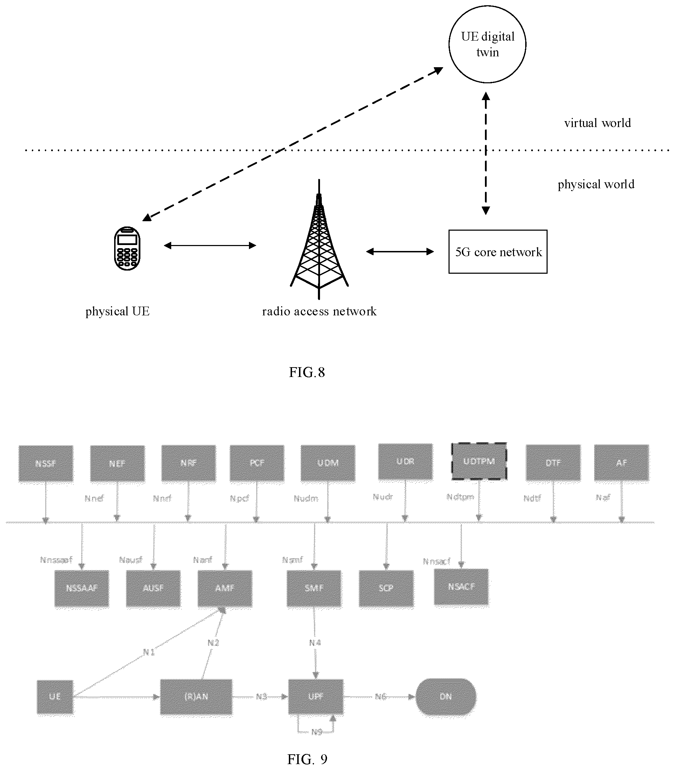

In some alternative embodiments, referring to FIG. 8, which is a diagram illustrating an architecture of applying a UE digital twin in a 5G network according to an embodiment of the present disclosure, including: a physical UE in the real physical world, a 5G core network in the real physical world, a radio access network (RAN) in the real physical world, and a UE digital twin in the virtual world.

For the UE in the physical space, its UE digital twin is its mirror image in the virtual world. In particular, the corresponding UE digital twin in the virtual world may establish a session with the 5G core network in the physical space using the virtual-to-physical bidirectional communication mode. The physical UE may synchronize its own critical data and key functions, i.e., the digital twin profile information, with a database on the second core network function (which is not illustrated in FIG. 8), such as a UDTPM, so that the first core network function may subsequently search the digital twin profile information from this database to create the UE digital twin.

For each physical UE, the digital twin profile information is configured to model the UE in the virtual world. When the UE is temporarily unavailable or performing non-real-time task, its digital twin profile information enables the digital twin to participate in the 5G service in place of the physical UE in the physical space.

In addition, the UE digital twin may synchronize data generated in a process of the communication and/or task collaboration with the corresponding UE in the real physical world.

In the above embodiments, the architecture of the UE digital twin is provided to enable the UE digital twin for the network service, realizing the purpose of applying the DT to the mobile communication technology network to implement network services, which has high availability.

In some alternative embodiments, referring to FIG. 9, FIG. 9 is a diagram illustrating another architecture of applying a UE digital twin in a 5G network according to an embodiment of the present disclosure.

The second core network function may be an independently configured network function (as shown in FIG. 9, in which the second core network function is a UDTPM), or the second core network function is configured on a unified data management (UDM) or a unified data repository (UDR) (which are not illustrated in FIG. 9).

The UE digital twin may be created based on the UE digital twin profile information stored in a database on the second core network function. The first core network function, such as a digital twin function (DTF) shown in FIG. 9, is responsible for collaborating with the other virtual UE and/or physical UE. In particular, the first core network function search from the database on the second core network function for the required data and model, i.e., the UE digital twin profile information, to create the UE digital twin in place of the physical UE. After interacting with the other virtual/physical UE, the DTF may store the data generated by the collaboration task into a database on the second core network function, which would be synchronized with the corresponding the physical UE.

In the above embodiments, the architecture of applying the UE digital twin in a 5G network is provided to enable the UE digital twin for the network service, realizing the purpose of applying the DT to the mobile communication technology network to implement the network service, which has high availability.

A method for communication provided by the present disclosure is described below for a physical UE.

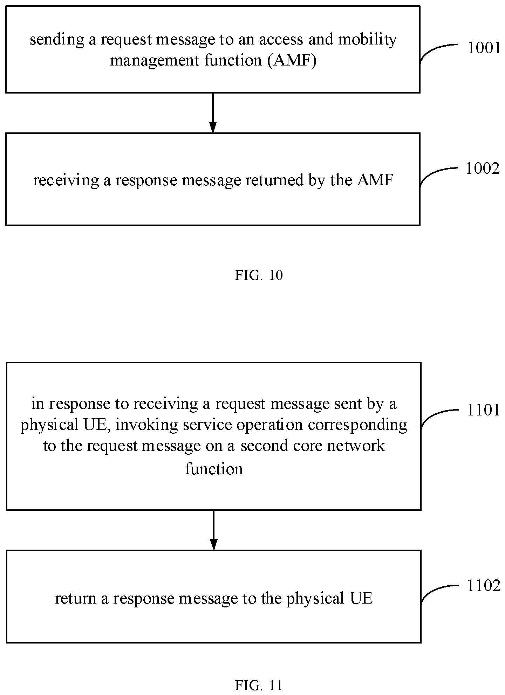

An embodiment of the present disclosure provides a method for communication, referring to FIG. 10, which is a flowchart illustrating a method for communication according to an embodiment of the present disclosure, the method may performed by the physical UE, and the method may include the following steps.

At step 1001, a request message is sent to an access and mobility management function (AMF).

In an embodiment of the present disclosure, the request message is configured to request a second core network function to perform service operation related to UE digital twin profile information, and the UE digital twin profile information is configured to create a UE digital twin.

In a possible implementation, the service operation includes at least one of: creation service operation, configured to create the UE digital twin profile information; update service operation, configured to update at least one of the UE digital twin profile information; or deletion service operation, configured to delete at least one of the UE digital twin profile information.

In a possible implementation, the request message is transmitted to the AMF through an N1 interface non-access stratum (NAS) signal.

At step 1002, a response message returned by the AMF is received.

In a possible implementation, the response message is transmitted from the AMF to the physical UE through an N1 interface NAS signal.

In the above embodiment, the physical UE may operate and manage the UE digital twin profile information on the second core network function through the AMF, facilitating synchronization of data and functions on the physical UE to the UE digital twin as much as possible, and realizing the purpose of performing communication and/or task collaboration with the other device in the network through the UE digital twin in place of a physical UE.

A method for communication provided by the present disclosure is described below for the AMF.

The embodiment of the present disclosure provides a method for communication , referring to FIG. 11, which is a flowchart illustrating a method for communication according to an embodiment of the present disclosure, the method may performed by an AMF, and the method may include the following steps.

At step 1101, in response to receiving a request message sent by a physical UE, service operation corresponding to the request message on a second core network function is invoked.

In an embodiment of the present disclosure, the request message is configured to request the second core network function to perform service operation related to UE digital twin profile information, and the UE digital twin profile information is configured to create a UE digital twin.

In a possible implementation, the service operation includes at least one of: creation service operation, configured to create the UE digital twin profile information; update service operation, configured to update at least one of the UE digital twin profile information; or deletion service operation, configured to delete at least one of the UE digital twin profile information.

In a possible implementation, the request message is transmitted to the AMF through an N1 interface NAS signal and an AMF.

At step 1102, a response message is returned to the physical UE.

In a possible implementation, the request message is transmitted from the AMF to the physical UE through an N1 interface NAS signal.

In the above embodiment, the interaction of the AMF with the physical UE and the second core network function allows the physical UE to operate and manage the UE digital twin profile information on the second core network function through the AMF, and synchronize the data and functions on the physical UE with the UE digital twin as much as possible, to realize the purpose of performing the communication and/or task collaboration with other devices in the network through the UE digital twin in place of the physical UE.

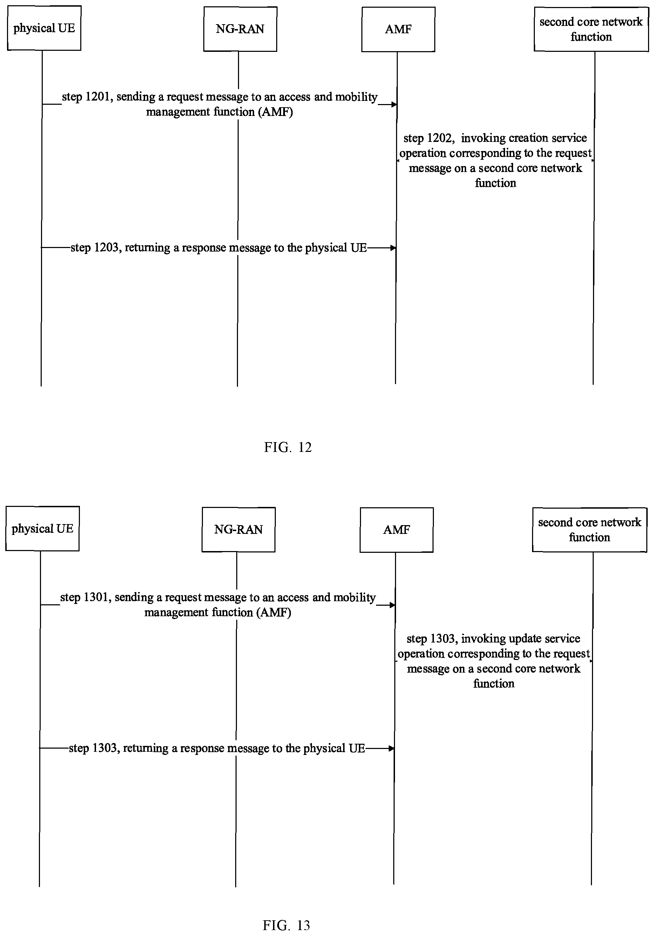

In some alternative embodiments, referring to FIG. 12, which is a flowchart illustrating a method for creating UE digital twin profile information according to an embodiment of the present disclosure, the method includes the following steps.

At step 1201, a physical UE sends a request message to an access and mobility management function (AMF).

In an embodiment of the present disclosure, the request message is configured to request a second core network function to perform creation service operation for creating UE digital twin profile information.

At step 1202, the AMF invokes the creation service operation corresponding to the request message on the second core network function.

In an embodiment of the present disclosure, the creation service operation is Nudtpm_ParameterProvision_Create service operation.

At step 1203, the AMF returns a response message to the physical UE.

In an embodiment of the present disclosure, the response message may inform the physical UE of a creation result of creating the UE digital twin profile information on the second core network function, such as success or failure of the creation, and the reason for the failure and the like.

In the above embodiments, the purpose of creating the UE digital twin profile information on the second core network function can be realized, which is easy to implement and with high availability.

In some alternative embodiments, referring to FIG. 13, which is a flowchart illustrating a method for updating UE digital twin profile information according to an embodiment of the present disclosure, the method includes the following steps.

At step 1301, a physical UE sends a request message to an access and mobility management function (AMF).

In an embodiment of the present disclosure, the request message is configured to request a second core network function to perform update service operation for updating at least one of the UE digital twin profile information.

At step 1302, the AMF invokes the update service operation corresponding to the request message on the second core network function.

In an embodiment of the present disclosure, the update service operation is Nudtpm_ParameterProvision_Update service operation.

At step 1303, the AMF returns a response message to the physical UE.

In an embodiment of the present disclosure, the response message may inform the physical UE of at least one of the result of updating the UE digital twin profile information on the second core network function, such as success or failure of the updating, and the reason for the failure and the like.

In the above embodiments, the purpose of updating the UE digital twin profile information on the second core network function can be realized, which is easy to implement and with high availability.

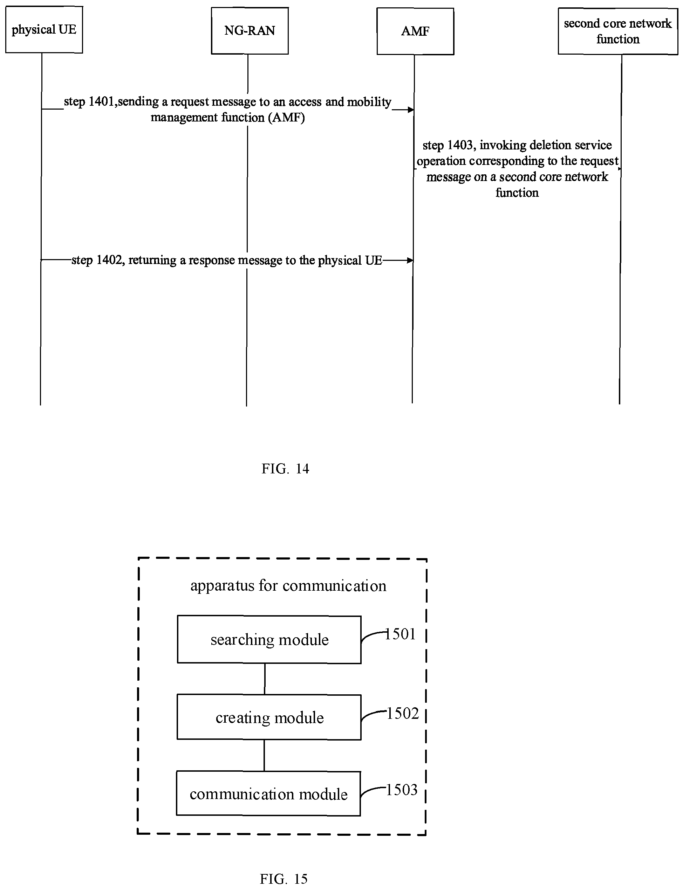

In some alternative embodiments, referring to FIG. 14, which is a flowchart illustrating a method for deleting UE digital twin profile information according to an embodiment of the present disclosure, the method includes the following steps.

At step 1401, a physical UE sends a request message to an access and mobility management function (AMF).

In an embodiment of the present disclosure, the request message is configured to request a second core network function to perform deletion service operation for deleting at least one of the UE digital twin profile information.

At step 1402, the AMF invokes the deletion service operation corresponding to the request message on the second core network function.

In an embodiment of the present disclosure, the delete service operation is Nudtpm_ParameterProvision_Delete service operation.

At step 1403, the AMF returns a response message to the physical UE.

In an embodiment of the present disclosure, the response message may inform the physical UE of at least one of the result of deleting the UE digital twin profile information on the second core network function, such as success or failure of the deletion, and the reason for the failure and the like.

In the above embodiment, the purpose of deleting the UE digital twin profile information on the second core network function can be realized, which is easy to implement and with high availability.

In correspondence with the above embodiments of the method for communication, there are provided embodiments of an apparatus for communication in the present disclosure.

Referring to FIG. 15, which is a block diagram illustrating an apparatus for communication according to an embodiment of the present disclosure, the apparatus is applied to a first core network function, and includes:
a searching module 1501, configured to search for UE digital twin profile information from a second core network function; in which the UE digital twin profile information is configured to create a UE digital twin;
a creating module 1502, configured to create the UE digital twin based on the UE digital twin profile information; and
a communication module 1503, configured to communicate with an other device in a network through the UE digital twin in place of a physical UE.

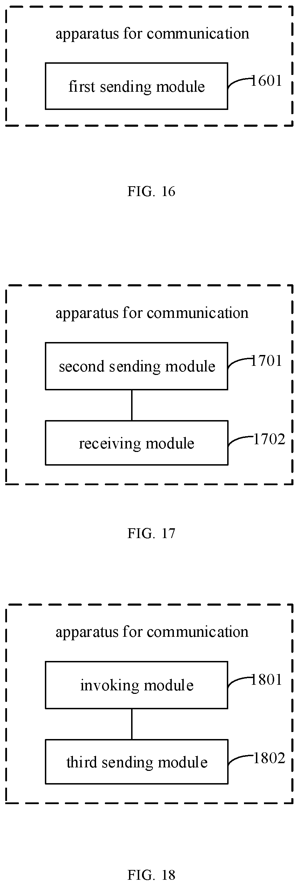

Referring to FIG. 16, which is a block diagram illustrating an apparatus for communication according to an embodiment of the present disclosure, the apparatus is applied to a second core network function, and includes:
a first sending module 1601, configured to send UE digital twin profile information searched by a first core network function to the first core network function; in which the UE digital twin profile information is configured to create a UE digital twin.

Referring to FIG. 17, which is a block diagram illustrating an apparatus for communication according to an embodiment of the present disclosure, the apparatus is applied to a physical UE, and includes:
a second sending module 1701, configured to send a request message to an access and mobility management function (AMF); in which the request message is configured to request a second core network function to perform a service operation related to UE digital twin profile information, and the UE digital twin profile information is configured to create a UE digital twin; and
a receiving module 1702, configured to receive a response message returned by the AMF.

Referring to FIG. 18, which is a block diagram illustrating an apparatus for communication according to an embodiment of the present disclosure, the apparatus is applied to an access and mobility management function (AMF), and includes:
an invoking module 1801, configured to, in response to receiving a request message sent by a physical UE, invoke service operation corresponding to the request message on a second core network function; in which the request message is configured to request the second core network function to perform service operation related to UE digital twin profile information, and the UE digital twin profile information is configured to create a UE digital twin; and
a third sending module 1802, configured to return a response message to the physical UE.

For the embodiments of the apparatus, since they basically correspond to the embodiments of the method, relevant description can refer to the embodiments of the method. The embodiments of the apparatus described above are merely schematic, in which the units described above as separated components may or may not be physically separated, and the components displayed as units may or may not be physical units. That is, they may be located at a single place, or may also be distributed to a plurality of network units. Some or all of these modules can be selected to fulfill the purpose of the scheme of the present disclosure according to actual needs. It can be understood and implemented by a person of ordinary skill in the art without creative labor.

Accordingly, the present disclose further provides a computer-readable storage medium having stored a computer program that, implements any of the described methods for communication for the first core network function.

Accordingly, the present disclose further provides a computer-readable storage medium having stored a computer program that, implements any of the described methods for communication for the second core network function.

Accordingly, the present disclose further provides a computer-readable storage medium having stored a computer program that, implements any of the described methods for communication for the physical UE.

Accordingly, the present disclose further provides a computer-readable storage medium having stored a computer program that, implements any of the described methods for communication for the AMF.

Accordingly, a communication apparatus is also provided in the present disclosure, and the communication apparatus includes:
a processor; and
a memory storing instructions executable by the processor;
in which the processor is configured to perform any of the described methods for communication for the first core network function.

Accordingly, a communication apparatus is also provided in the present disclosure, and the communication apparatus includes:
a processor; and
a memory storing instructions executable by the processor;
in which the processor is configured to perform any of the described methods for communication for the second core network function.

Accordingly, a communication apparatus is also provided in the present disclosure, and the communication apparatus includes:
a processor; and
a memory storing instructions executable by the processor;
in which the processor is configured to perform any of the described methods for communication for the AMF.

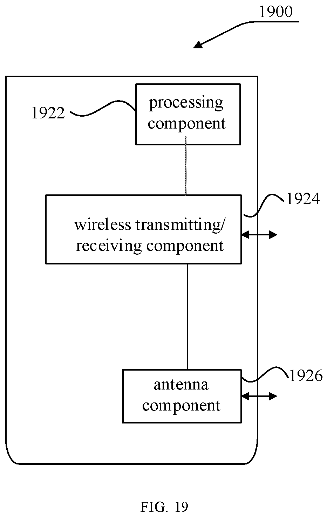

Referring to FIG. 19, which is a schematic diagram illustrating a communication apparatus 1900 according to an embodiment of the present disclosure. The apparatus 1900 may be provided as a first core network function, a second core network function, or an AMF. Referring to FIG. 19, the apparatus 1900 includes a processing component 1922, a wireless transmitting/receiving component 1924, an antenna component 1926, and a signal processing portion specific to a wireless interface, and the processing component 1922 may further include at least one processor.

One of processors in the processing component 1922 may be configured for performing any of the methods for communication described above.

Accordingly, a communication apparatus is also provided in the present disclosure, and includes:
a processor; and
a memory for storing processor executable instructions;
in which the processor is configured to perform any of the described methods for communication for the physical UE.

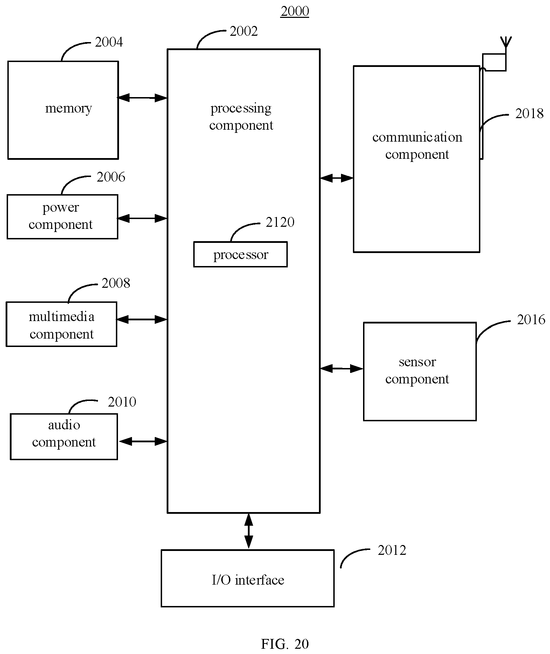

Referring to FIG. 20, which is a block diagram of a communication apparatus 2000 according to an embodiment of the present disclosure. For example, the communication apparatus 2000 may be a physical UE, such as a cell phone, a tablet computer, an e-book reader, a multimedia playback device, a wearable device, an in-vehicle user device, an ipad, a smart TV, and the like.

Referring to FIG. 20, the apparatus 2000 may include one or more of the following components: a processing component 2002, a memory 2004, a power component 2006, a multimedia component 2008, an audio component 2010, an input/output (I/O) interface 2012, a sensor component 2016, and a communication component 2018.

The processing component 2002 generally controls overall operation of the apparatus 2000, such as operations associated with display, telephone calls, data communications, camera operations, and recording operations. The processing component 2002 may include one or more processors 2020 to execute instructions to complete all or part of the steps of the above method. In addition, the processing component 2002 may include one or more modules to facilitate interactions between the processing component 2002 and other components. For example, the processing component 2002 may include a multimedia module to facilitate interactions between the multimedia component 2008 and the processing component 2002. As another example, the processing component 2002 may read executable instructions from the memory to implement the steps of one of the methods for communication provided in the above embodiments.

The memory 2004 is configured to store various types of data to support operations at the apparatus 2000. Examples of such data include instructions for any application or method operating on the apparatus 2000, contact data, phonebook data, messages, pictures, videos, etc. The memory 2004 may be implemented by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic storage, a flash memory, a magnetic disk or an optical disk.

The power component 2006 provides power to various components of the apparatus 2000. The power component 2006 may include a power management system, one or more power supplies, and other components associated with generating, managing, and distributing power for the apparatus 2000.

The multimedia component 2008 includes a screen that provides an output interface between the apparatus 2000 and the user. In some embodiments, the multimedia component 2008 includes a front-facing camera and/or a rear-facing camera. When the apparatus 2000 is in an operation mode, such as a shooting mode or a video mode, the front camera and/or the rear camera may receive external multimedia data. Each of the front-facing camera and the rear-facing camera may be a fixed optical lens system or may have variable focal length and optical zoom capabilities.

The audio component 2010 is configured to output and/or input audio signals. For example, the audio component 2010 includes a microphone (MIC), which is configured to receive external audio signals when the apparatus 2000 is in an operating mode, such as a call mode, a recording mode, and a voice recognition mode. The received audio signal may be further stored in the memory 2004 or transmitted via the communication component 2018. In some embodiments, the audio component 2010 also includes a speaker for outputting audio signals.

The I/O interface 2012 provides an interface between the processing component 2002 and a peripheral interface module, which may be a keyboard, a click wheel, a button, etc. The button may include, but is not limited to: a home button, volume buttons, a start button, and a lock button.

The sensor component 2016 includes one or more sensors for providing status assessment of various aspects for the apparatus 2000. For example, the sensor component 2016 may detect an open/closed state of the apparatus 2000, a relative positioning of components, such as a display and a keypad of the apparatus 2000. The sensor component 2016 may also detect position changes of the apparatus 2000 or a component of the apparatus 2000, a presence or absence of user contacts with the apparatus 2000, an orientation or an acceleration/deceleration of the apparatus 2000 and temperature changes of the apparatus 2000. The sensor component 2016 may include a proximity sensor configured to detect a presence of a nearby object without any physical contact. The sensor component 2016 may also include a light sensor, such as a CMOS or CCD image sensor, for use in imaging applications. In some embodiments, the sensor component 2016 may also include an acceleration sensor, a gyroscope sensor, a magnetic sensor, a pressure sensor, or a temperature sensor.

The communication component 2018 is configured to facilitate wired or wireless communication between the apparatus 2000 and other devices. The apparatus 2000 may access a wireless network based on a communication standard, such as Wi-Fi, 2G, 3G, 4G, 5G, 6G or their combination. In an exemplary embodiment, the communication component 2018 receives a broadcast signal or broadcast-related information from an external broadcast management system via a broadcast channel. In an exemplary embodiment, the communication component 2018 also includes a near field communication (NFC) module to facilitate short-range communications. For example, the NFC module may be implemented based on radio frequency identification (RFID) technology, infrared data association (IrDA) technology, ultra wideband (UWB) technology, Bluetooth (BT) technology, and other technologies.

In an exemplary embodiment, the apparatus 2000 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components to perform any of the above methods for communication for the terminal.

In an exemplary embodiment, a non-transitory computer-readable storage medium including instructions is also provided, such as the memory 2004 including instructions. The above instructions may be executed by the processor 2020 of the apparatus 2000 to perform the above methods. For example, the non-transitory computer-readable storage medium may be a ROM, a random access memory (RAM), a CD-ROM, a magnetic tape, a floppy disk, an optical data storage device, and the like.

Other implementations of the embodiments of the present disclosure may be apparent to those skilled in the art from consideration of the specification and practice of the invention disclosed herein. This present disclosure intends to cover any modifications, uses or adaptive changes of the embodiments of the present disclosure, which follow the general principles of the embodiments of the present disclosure and include common knowledge or conventional technical means in the technical field that are not disclosed in the present disclosure. The specification and the embodiments are considered as exemplary only, with a true scope and spirit of the embodiments of the present disclosure being indicated by the following claims.

It should be understood that the embodiments of the present disclosure are not limited to the exact structures that have been described above and shown in the drawings, and that various modifications and changes may be made without departing from the scope of the disclosure. The scope of the embodiments of the present disclosure is limited only by the appended claims.

## Claims

1. A method for communication, performed by a first core network function, comprising:
searching for UE digital twin profile information from a second core network function; wherein the UE digital twin profile information is configured to create a UE digital twin; and
creating the UE digital twin based on the UE digital twin profile information; and
performing communication with an other device in a network through the UE digital twin in place of a physical UE.

2. The method of claim 1, wherein performing the communication with the other device in the network through the UE digital twin in place of the physical UE comprises any one of:
performing the communication with the other device through the UE digital twin in place of the physical UE in a case that the physical UE is unavailable; or
performing the communication with the other device through the UE digital twin in place of the physical UE in a case that the physical UE performs a non-real-time task.

3. The method of claim 1, further comprising:
performing task collaboration with the other device through the UE digital twin, after loading the UE digital twin profile information.

4. The method of any one of claims 1 to 3, further comprising:
sending data generated in a process of the communication or task collaboration to the second core network function; wherein the second core network function is configured to store the data and synchronize the data with the physical UE.

5. The method of any one of claims 1 to 3, wherein the other device comprises at least one of:
a core network function, an other physical UE, or an other UE digital twin.

6. The method of claim 1, wherein the digital twin profile information comprises at least one of:
state information of the physical UE;
network service capability information of the physical UE;
task data of the physical UE;
strategy information for the physical UE to perform a task;
model information and/or algorithm information corresponding to a task; or
information of an environment where the physical UE is located.

7. The method of claim 6, wherein the state information comprises at least one of:
battery state information, temperature information, transmission power information, processor computing capability information, screen resolution information, or other state information.

8. A method for communication, performed by a second core network function, comprising:
sending UE digital twin profile information searched by a first core network function to the first core network function; wherein the UE digital twin profile information is configured to create a UE digital twin.

9. The method of claim 8, wherein the digital twin profile information comprising at least one of:
state information of a physical UE;
network service capability information of a physical UE;
task data of a physical UE;
strategy information for a physical UE to perform a task;
model information and/or algorithm information corresponding to a task; or
information of an environment where a physical UE is located.

10. The method of claim 9, wherein the state information comprising at least one of:
battery state information, temperature information, transmission power information, processor computing capability information, screen resolution information, or other state information.

11. The method of claim 8, further comprising:
in response to an access and mobility management function (AMF) invoking service operation related to the UE digital twin profile information on the second core network function, performing the service operation.

12. The method of claim 11, wherein the service operation comprising at least one of:
creation service operation, configured to create the UE digital twin profile information;
update service operation, configured to update at least one of the UE digital twin profile information; or
deletion service operation, configured to delete at least one of the UE digital twin profile information.

13. The method of claim 8, further comprising:
receiving data sent by the first core network function; wherein the data is generated by the first core network function in a process of performing communication or task collaboration with an other device in a network through the UE digital twin in place of a physical UE;
storing the data; and
synchronizing the data with the physical UE.

14. The method of any one of claims 8 to 13, wherein the second core network function is an independently configured function; or
the second core network function is configured on an unified data management (UDM) or an unified data repository (UDR).

15. A method for communication, performed by a physical UE, comprising:
sending a request message to an access and mobility management function (AMF); wherein the request message is configured to request a second core network function to perform service operation related to UE digital twin profile information, and the UE digital twin profile information is configured to create a UE digital twin; and
receiving a response message returned by the AMF.

16. The method of claim 15, wherein the service operation comprises at least one of:
creation service operation, configured to create the UE digital twin profile information;
update service operation, configured to update at least one of the UE digital twin profile information; or
deletion service operation, configured to delete at least one of the UE digital twin profile information.

17. The method of claim 15, wherein the request message is transmitted through an N1 interface non-access stratum (NAS) signal; and/or
the response message is transmitted through an N1 interface NAS signal.

18. The method of any one of claims 15 to 17, wherein the digital twin profile information comprises at least one of:
state information of the physical UE;
network service capability information of the physical UE;
task data of the physical UE;
strategy information for the physical UE to perform a task;
model information and/or algorithm information corresponding to a task; or
information of an environment where the physical UE is located.

19. The method of claim 18, wherein the state information comprises at least one of:
battery state information, temperature information, transmission power information, processor computing capability information, screen resolution information, or other state information.

20. A method for communication, applied to an access and mobility management function (AMF), comprising:
in response to receiving a request message sent by a physical UE, invoking service operation corresponding to the request message on a second core network function; wherein the request message is configured to request the second core network function to perform service operation related to UE digital twin profile information, and the UE digital twin profile information is configured to create a UE digital twin; and
returning a response message to the physical UE.

21. The method of claim 20, wherein the service operation comprises at least one of:
creation service operation, configured to create the UE digital twin profile information;
update service operation, configured to update at least one of the UE digital twin profile information; or
deletion service operation, configured to delete at least one of the UE digital twin profile information.

22. The method of claim 20, wherein the request message is transmitted through an N1 interface non-access stratum (NAS) signal; and/or
the response message is transmitted through an N1 interface NAS signal.

23. The method of any one of claims 20 to 22, wherein the digital twin profile information comprises at least one of:
state information of the physical UE;
network service capability information of the physical UE;
task data of the physical UE;
strategy information for the physical UE to perform a task;
model information and/or algorithm information corresponding to a task; or
information of an environment where the physical UE is located.

24. The method of claim 23, wherein the state information comprises at least one of:
battery state information, temperature information, transmission power information, processor computing capability information, screen resolution information, or other state information.

25. An apparatus for communication, applied to a first core network function, comprising:
a searching module, configured to search for UE digital twin profile information from a second core network function; wherein the UE digital twin profile information is configured to create a UE digital twin;
a creating module, configured to create the UE digital twin based on the UE digital twin profile information; and
a communication module, configured to communicate with an other device in a network through the UE digital twin in place of a physical UE.

26. An apparatus for communication, applied to a second core network function, comprising:
a first sending module, configured to send UE digital twin profile information searched by a first core network function to the first core network function; wherein the UE digital twin profile information is configured to create a UE digital twin.

27. An apparatus for communication, applied to a physical UE, comprising:
a second sending module, configured to send a request message to an access and mobility management function (AMF); wherein the request message is configured to request a second core network function to perform service operation related to UE digital twin profile information, and the UE digital twin profile information is configured to create a UE digital twin; and
a receiving module, configured to receive a response message returned by the AMF.

28. An apparatus for communication, applied to an access and mobility management function (AMF), comprising:
an invoking module, configured to, in response to receiving a request message sent by a physical UE, invoke service operation corresponding to the request message on a second core network function; wherein the request message is configured to request the second core network function to perform service operation related to UE digital twin profile information, and the UE digital twin profile information is configured to create a UE digital twin; and
a third sending module, configured to return a response message to the physical UE.

29. A computer-readable storage medium having stored a computer program that, implements the method for communication of any one of claims 1 to 7.

30. A computer-readable storage medium having stored a computer program that, implements the method for communication of any one of claims 8 to 14.

31. A computer-readable storage medium having stored a computer program that, implements the method for communication of any one of claims 15 to 19.

32. A computer-readable storage medium having stored a computer program that, implements the method for communication of any one of claims 20 to 24.

33. A communication apparatus, comprising:
a processor;
a memory storing instructions executable by the processor;
wherein the processor is configured to execute the executable instructions to implement the method for communication of any one of claims 1 to 7.

34. A communication apparatus, comprising:
a processor;
a memory storing instructions executable by the processor;
wherein the processor is configured to execute the executable instructions to implement the method for communication of any one of claims 8 to 14.

35. A communication apparatus, comprising:
a processor;
a memory storing instructions executable by the processor;
wherein the processor is configured to execute the executable instructions to implement the method for communication of any one of claims 15 to 19.

36. A communication apparatus, comprising:
a processor;
a memory storing instructions executable by the processor;
wherein the processor is configured to execute the executable instructions to implement the method for communication of any one of claims 20 to 24.
